**Europäisches Patentamt**

**European Patent Office**

**Office européen des brevets**

(19)

(11) Publication number: **0 029 257**
**B1**

(12) # EUROPEAN PATENT SPECIFICATION

(45) Date of publication of patent specification: **07.11.84**

(21) Application number: **80200592.6**

(22) Date of filing: **23.06.80**

(51) Int. Cl.³: **C 23 F 9/00,** C 23 F 7/02, C 25 D 11/38, F 24 J 3/02

(54) **Substrate coated with a corrosion-resistant black layer and process for obtaining such a substrate.**

(30) Priority: **25.06.79 NL 7904925**

(43) Date of publication of application:
**27.05.81 Bulletin 81/21**

(45) Publication of the grant of the patent:
**07.11.84 Bulletin 84/45**

(84) Designated Contracting States:
**AT DE FR GB IT NL**

(56) References cited:
**AU-D-1 026 676**
**DE-A-2 634 457**
**FR-A-2 139 750**
**FR-A-2 422 739**
**US-A-3 245 885**
**US-A-3 295 936**
**US-A-3 920 413**

(73) Proprietor: **N.V. Philips' Gloeilampenfabrieken**
**Groenewoudseweg 1**
**NL-5621 BA Eindhoven (NL)**

(72) Inventor: **van der Werf, Bernardus Theodorus**
**c/o Int. Octrooibureau B.V. Prof. Holstlaan 6**
**NL-5656 AA Eindhoven (NL)**
Inventor: **van de Leest, Renaat Edmond**
**c/o Int. Octrooibureau B.V. Prof. Holstlaan 6**
**NL-5656 AA Eindhoven (NL)**

(74) Representative: **Jelmorini, Pius Antonius et al**
**INTERNATIONAAL OCTROOIBUREAU B.V. Prof.**
**Holstlaan 6**
**NL-5656 AA Eindhoven (NL)**

Courier Press, Leamington Spa, England.

## 0 029 257

### Description

The invention relates to a process of making a corrosion-resistant receiver plate for a solar energy collector and the receiver-plate obtained by this process.

Such a process is known from the United States Patent Specification 2,917,817. The black layer described in the aforesaid U.S. Specification consists *inter alia* of a deposit, containing nickel obtained by electroplating, for example a finely comminuted Ni-Zn alloy which probably also contains a quantity of NiS. A suitable electroplating solution for producing this deposit contains per liter:

75 g of nickel sulphate,
28 g of zinc sulphate,
24 g of ammonium sulphate,
17 g of ammonium thiocyanate,
 2 g of citric acid

and has a pH of approximately 4. The solution is used at a temperature of approximately 30°C and a current-density of 2 mA/cm$^2$ for 2—4 minutes. US—A—3,920,413 describes the manufacture of black nickel for use in solar energy absorbers by means of electroplating in a solution of a special composition.

Of importance for use in a solar energy collector is the absorption for sun rays in the visible part of the spectrum ($\alpha$), which must be as high as possible, and the emission ($\varepsilon$) in the infrared part, which must be as low as possible.

The use of black layers of this type is not limited to solar energy collectors only: such layers are also interesting for all sorts of decorative purposes. However, all applications require a good corrosion-resistance of the layers. In this respect the known layers leave much to be desired in an accelerated damp heat test. The deep black colour fades to a considerable extent after one day only. The value of $\alpha$ was considerably lowered and the value of $\varepsilon$ also became somewhat lower.

One object of the invention is to produce a black layer showing a considerable improvement of the corrosion-resistance.

According to the invention, a process of making a corrosion resistant receiver-plate for a solar energy collector, wherein a black, selectively absorbing layer of finely comminuted Ni, Ni-Zn or Ni-Pb is deposited by means of electroplating on a substrate, is characterized in that a thin protecting, passivating layer of chromic oxide is applied to the absorbing layer by subjecting it to a final-treatment in a solution containing chromate.

Such a layer, which is only some nm thick does not noticeably affect the appearance and the optical properties of the nickel-containing black layer.

It is assumed that, in addition, the chromic oxide layer prevents the finely comminuted metal particles from being sintered at elevated temperature, so that the layer also considerably contributes to an increase of the life.

This protective layer can be obtained by immersion in a neutral or weakly alkaline chromate solution, but the layer is preferably deposited by electroplating from a neutral or weakly alkaline chromate solution, the object being alternately the cathode and the anode (the so-called periodical reverse current electrolysis). The switching frequency is preferably of the order of 1—10 Hz, for example 5 Hz.

In literature deposition of chromic oxide and a treatment with a chromate solution have been mentioned in some places in relation with the manufacture of black layers.

The FR—A—2 139 750 relates to a poorly reflecting, mat surface, notably a metal part of a windscreen wiper which comprises a layer of dull nickel on which a layer of poorly reflecting black chromic oxide is deposited. The poor reflectance is due to the black chromic oxide. The black colour is obtained by an electroplating process from a solution containing a vanadium salt with a strong DC-current. The vanadium is responsible for the black colour of the deposit.

The DE—A—2 634 457 relates to the manufacture of a black oxide layer on copper by means of a chloride solution. The layer is treated with a chromate solution, which obviously prevents copper ions to be extracted by water from the layer, as the Applicant of this DE—A explains the effect.

According to the AU—A 10 266/76 the selective absorbance of black copper oxide is improved by a treatment with a chromate solution. This reaction is specific.

None of these publications provides an allusion to the process according to this invention. These known processes not only use the chromate-solution for a different purpose, but moreover the described processes differ from that according to the invention.

Copper or nickel is preferably used as the substrate to obtain an optimum corrosion-resistance of the assembly. The copper or nickel may be applied in the form of a layer on a steel base. Nickel is used when the emphasis is for corrosion-resistance, whereas copper is preferred for use in vacuum collectors in view of the lower $\varepsilon$.

The invention will now further be explained with reference to the following embodiments.

1. Steel plates having a surface area of 0.5 dm$^2$ are provided by means of electroplating with either a 2 $\mu$m thick layer of copper or a 2 $\mu$m thick layer of nickel.

2

# 0 029 257

A black Ni-Zn layer is electrodeposited on these steel plates by means of an electroplating bath having the following composition per liter of solution:

        100 g NiCl$_2$
         40 g NH$_4$Cl
         20 g NaSCN
         40 g ZnCl$_2$

The pH of the solution is 4.7. The solution is operated at room temperature and with a current density of 1—1.5 A/dm$^2$. Composition of the deposit: 20% Ni, 40—50% Zn and 30—40% sulphur in the form of sulphide.

The following Table 1 shows the influence of the layer thickness on $\alpha$ (absorption of visible radiation in %) and $\varepsilon$ (emission in the infrared in %).

The number of Coulombs used as representing the thickness of the deposition of the layer are given in order to obtain an indication of the layer thickness of the layer.

TABLE 1
Selectivity of black Ni/Zn layers

| Current density | Number of Coulombs/dm$^2$ | $\alpha$ | $\varepsilon$ |
|---|---|---|---|
| 1 A/dm$^2$ | 10 | 0.56 | 0.03 |
| | 20 | 0.94 | 0.10 |
| | 30 | 0.96 | 0.16 |
| | 40 | 0.96 | 0.22 |
| | 50 | 0.97 | 0.25 |
| 1.5 A/dm$^2$ | 20 | 0.92 | 0.07 |
| | 30 | 0.96 | 0.18 |
| | 40 | 0.97 | 0.28 |
| | 60 | 0.98 | 0.33 |
| | 100 | 0.98 | 0.54 |

Plates, having a 2 $\mu$m thick Ni-layers are plated with a Ni-Zn layer from the above-mentioned bath, which is operated with a current density of 1 A/dm$^2$ and a charge of 26 C/dm$^2$.

The following Table 2 shows the influence of an accelerated damp heat test on plates which were subjected to various different treatments. The accelerated damp heat test in accordance with IEC 68—2—11 test KA consists of a number of cycles wherein the temperature is increased from 20° to 55°C and the relative humidity (RH) is simultaneously changed from 80 to 100%.

The cycle consists of a period of 2 hours in which the temperature changes from 25° to 55°C and RH changes from 80 to 100%, a period of 16 hours in which the temperature remains 55°C and RH 95—100% and a period of 3 hours, wherein the temperature changes from 55° to 25°C and the humidity RH from 100 to 80%. Plates $B_1$ and $B_2$ were not subjected to a final treatment; $B_3$ and $B_4$ were chemically processed by immersing them in a chromic acid solution containing 10 g of $CrO_3$ per liter (pH = 7). The layers $B_5$—$B_{10}$ were electrochemically post-treated with an alternately, periodically reversed, cathodic and anodic current: $B_5$ and $B_6$ with a frequency of 0.75 Hz and a current of 100 mA; $B_7$ and $B_8$ with a frequency of 0.1 Hz and 150 mA and $B_9$ and $B_{10}$ with 5 Hz and 80 mA. The above-mentioned solution was used at room temperature.

3

**0 029 257**

TABLE 2
Selectivity of black Ni/Zn layers after damp-heat test

| | $\alpha$ | | | | $\beta$ | |
|---|---|---|---|---|---|---|
| | duration of damp-heat test | | | | duration of damp-heat test | |
| Sample | 0 | 1 day | 2 days | 3 days | 0 | 3 days |
| B1 | 0.95 | 0.91 | 0.64 | 0.38 | 0.23 | 0.20 |
| B2 | 0.96 | 0.81 | 0.49 | 0.27 | 0.24 | 0.11 |
| B3 | 0.96 | 0.96 | 0.96 | 0.96 | 0.25 | 0.20 |
| B4 | 0.96 | 0.96 | 0.96 | 0.96 | 0.27 | 0.23 |
| B5 | 0.96 | 0.96 | 0.96 | 0.96 | 0.31 | 0.27 |
| B6 | 0.96 | 0.96 | 0.96 | 0.96 | 0.34 | 0.28 |
| B7 | 0.96 | 0.96 | 0.96 | 0.96 | 0.12 | 0.10 |
| B8 | 0.95 | 0.95 | 0.95 | 0.95 | 0.25 | 0.21 |
| B9 | 0.96 | 0.96 | 0.96 | 0.96 | 0.13 | 0.12 |
| B10 | 0.96 | 0.96 | 0.96 | 0.96 | 0.31 | 0.27 |

2. A black Ni-Pb layer is deposited on metallized steel plates from a solution having the following composition per liter (pH = 4.3):

100 g $NiCl_2$
40 g $NH_4Cl$
20 g NaSCN
4 g $Pb (CH_3COO)_2.3H_2O$ (saturation concentration),

which is operated for 15 seconds at 3 A/dm² (45 Coulombs/dm²) and a bath temperature of 30°C. The value of $\alpha$ is 0.96—0.97 and of $\varepsilon$ 0.03 (on a copper base) and 0.12—0.13 (on a nickel base).

The accelerated damp-heat test caused the non-final treated plates to fade after only 1 day; the final-treated plates behaved in a similar way to those of Table 2.

3. A layer of black nickel is deposited on metallized steel plates by means of a bath having the following composition per liter

12 g $NiCl_2$
20 g $NH_4Cl$
10 g NaCl
20 g boric acid (5.5 < pH < 6.5)
150 mg Na-lauryl sulphate

the bath being operated at a current density of 30—50 A/dm² (total number of Coulombs/dm² 200 to 300). The value of $\alpha$ is 0.93 and of $\varepsilon = 0.1$.

In itself, the black Ni-layer has a corrosion-resistance which is better than that of Ni-Zn or Ni-Pb layer. However, also for these layers the durability is considerably increased when they are post-treated with a chromate solution with an alternately periodically reversed, cathodic and anodic current or without any current.

**Claims**

1. A process of making a corrosion-resistant receiver plate for a solar energy collector, wherein a black selectively absorbing layer of finely comminuted Ni, Ni-Zn or Ni-Pb is deposited by means of electroplating on a substrate, characterized in that a thin protective passivating layer of chromic oxide is

4

applied to the absorbing layer by subjecting it to a final-treatment in a solution containing chromate.

2. A process as claimed in Claim 1, characterized in that the final-treatment is carried out electrolytically wherein the workpiece is alternately cathode and anode with a switching frequency of the order of 1—10 Hz.

3. A solar energy collector plate obtained by the process of Claim 1 or 2.

**Revendications**

1. Procédé permettant de réaliser une plaque réceptrice résistant à la corrosion pour un collecteur d'énergie solaire, selon lequel une couche d'absorption sélective noire en Ni, Ni-Zn ou Ni-Pb finement divisé est déposée par voie électrolytique sur un substrat, caractérisé en ce qu'une couche de passivation protectrice de sesquioxyde de chrome est appliquée sur la couche absorbante en la soumettant à un traitement final dans une solution contenant du chromate.

2. Procédé selon la revendication 1, caractérisé en ce que le post-traitement s'effectue par voie électrolytique et la pièce à traiter est alternativement cathode et anode à fréquence de commutation de l'ordre de 1 à 10 Hz.

3. Plaque de collecteur d'énergie solaire obtenue à l'aide du procédé selon la revendication 1 ou 2.

**Patentansprüche**

1. Verfahren zum Herstellen einer korrosionsbeständigen Auffangplatte für einen Sonnenenergiekollektor, wobei ein schwarze selektiv absorbierende Schicht aus fein verteiltem Ni, Ni-Zn oder Ni-Pb galvanisch auf einem Substrat niedergeschlagen wird, dadurch gekennzeichnet, dass eine dünne passivierende Schutzschicht aus Chromoxyd auf der Absorptionsschicht angebracht wird, indem diese Schicht einer Nachbehandlung in einer chromathaltigen Lösung ausgesetzt wird.

2. Verfahren nach Anspruch 1 dadurch gekennzeichnet, dass die Nachbehandlung elektrolytisch durchfeführt wird, wobei das Werkstück abwechselnd Kathode und Anode ist mit einer Schaltfrequenz in der Grössenordnung von 1—10 Hz.

3. Sonnenenergiekollektorplatte, erhalten nach dem Verfahren nach Anspruch 1 oder 2.